# EUROPÄISCHE PATENTSCHRIFT

(11) **EP 2 218 129 B1**
(45) Veröffentlichungstag und Bekanntmachung des Hinweises auf die Patenterteilung: **02.10.2013**
(21) Anmeldenummer: 08849059.4
(22) Anmeldetag: 28.10.2008
(51) Int. Cl.: H01M 8/04

(54) **BRENNSTOFFZELLENANTRIEB FÜR EIN KRAFTFAHRZEUG**
FUEL CELL DRIVE FOR A MOTOR VEHICLE
COMMANDE DE PILE À COMBUSTIBLE POUR UN VÉHICULE

(30) Priorität: 14.11.2007 DE 102007054246
(43) Veröffentlichungstag der Anmeldung: 18.08.2010
(73) Patentinhaber: Daimler AG, 70327 Stuttgart (DE)
(72) Erfinder: HINSENKAMP, Gert, 73730 Esslingen (DE); SOCZKA-GUTH, Thomas, 89601 Schelklingen (DE); WIESHEU, Norbert, 89312 Günzburg (DE)
(74) Vertreter: JENSEN & SON
(86) Internationale Anmeldenummer: PCT/EP2008/009082
(87) Internationale Veröffentlichungsnummer: WO 2009/062595

(56) Entgegenhaltungen:
- EP-A- 0 741 428
- WO-A-01/73879
- US-A1- 2002 192 521

## Beschreibung

Die Erfindung betrifft einen Brennstoffzellenantrieb für ein Kraftfahrzeug, insbesondere ein Nutzfahrzeug.

In DE 10 2004 037 901 A1 wird eine Brennstoffzellenanlage mit einer Brennstoffzelleneinheit zur Erzeugung von elektrischem Strom und/oder thermischer Wärme sowie einer Kühlvorrichtung zur Kühlung der Brennstoffzelleneinheit vorgeschlagen. Dabei weist die Kühlvorrichtung wenigstens einen ersten Strömungsgenerator zur Erzeugung einer Strömung eines ersten Kühlfluids, insbesondere eines Kühlwassers, und einen zweiten Strömungsgenerator zur Erzeugung einer Strömung eines zweiten Kühlfluids, insbesondere einer Kühlluft, auf. Die Kühlvorrichtung bezweckt eine effiziente Temperaturregelung der Brennstoffzelleneinheit. Dazu ist eine Kontrolleinheit zum Vergleich eines ersten Betriebsparameters oder einer Änderung des ersten Betriebsparameters des ersten Strömungsgenerators mit einem zweiten Betriebsparameter oder einer Änderung des zweiten Betriebsparameters des zweiten Strömungsgenerators vorgesehen. Die Betriebsparameter der Strömungsgeneratoren sind dabei bevorzugt eine Leistung bzw. eine Drehzahl und/oder ein Kühlfluidstrom. Mit Hilfe des Vergleichs der Betriebsparameter bzw. der Änderung der Betriebsparameter der beiden Strömungsgeneratoren ist eine Auswahl des Strömungsgenerators vorgesehen, der in Abhängigkeit des Betriebszustandes bzw. der Änderung des Betriebszustandes effizienter arbeitet bzw. effizienter die Abwärme aus dem Kühlkreislauf der Brennstoffzelleneinheit abführt als der andere Strömungsgenerator. Dadurch wird bezweckt, dass der jeweils effizienteste Strömungsgenerator mit Hilfe der Kontrolleinheit die Temperatur der Brennstoffzelleneinheit regelt. Dabei ist die Kontrolleinheit zur Prüfung der ersten und/oder zweiten Betriebsparameter der beiden Strömungsgeneratoren vorzugsweise in Abhängigkeit wenigstens eines Parameters oder einer Änderung des Parameters der Brennstoffzelleneinheit ausgebildet. Beispielsweise ist der Parameter bzw. die Änderung des Parameters der Brennstoffzelleneinheit eine Last bzw. elektrische Leistungsabgabe und/oder eine Wärmeabgabe.

Der Stand der Technik kennt außerdem Brennstoffzellenanlagen, welche über mehrere Brennstoffzellen verfügen, welche zumindest hinsichtlich ihrer elektrischen Leistung unabhängig voneinander angesteuert werden können und über eine gemeinsame Peripherie in Form eines gemeinsamen Kühlkreislaufs verfügen. Beispielhaft wird hierzu auf die EP 0 741 428 A1 und die US 2002/0192521 A1 verwiesen.

Ferner ist ein vergleichbarer Aufbau auch aus der gattungsgemäßen WO 01/73879 A1 bekannt. Zusätzlich ist es hier möglich, auch die Kühlleistung der einzelnen Brennstoffzelleneinheiten der Brennstoffzellenanlage unabhängig voneinander zu beeinflussen.

Der Erfindung liegt die Aufgabe zugrunde, einen Brennstoffzellenantrieb für ein Kraftfahrzeug, insbesondere ein Nutzfahrzeug, anzugeben, dessen Brennstoffzellen lastabhängig kühlbar sind, so dass sie auf einem möglichst konstanten vorgebbaren Temperaturniveau betreibbar sind.

Die Aufgabe wird erfindungsgemäß durch eine Anordnung gelöst, welche die in Anspruch 1 angegebenen Merkmale aufweist.

Vorteilhafte Ausgestaltungen der Erfindung sind Gegenstand der Unteransprüche.

Die Erfindung sieht einen Brennstoffzellenantrieb für ein Kraftfahrzeug gemäß Anspruch 1, insbesondere ein Nutzfahrzeug, mit einer Brennstoffzellenanlage als Energiequelle und einer Brennstoffzellenkühlanlage zur lastabhängig regelbaren Kühlung der Brennstoffzellenanlage vor. Dabei umfasst die Brennstoffzellenanlage wenigstens zwei unabhängig voneinander ansteuerbare Brennstoffzelleneinheiten mit jeweils einer Anzahl in Reihe geschalteter Brennstoffzellen und die Brennstoffzellenkühlanlage umfasst für jede dieser Brennstoffzelleneinheiten eine eigene Brennstoffzellenkühleinheit, mittels derer die Brennstoffzellen der jeweiligen Brennstoffzelleneinheit in Abhängigkeit von wenigstens einer Regelgröße kühlbar sind. Geeignete Regelgrößen sind insbesondere wenigstens eine Temperatur der jeweiligen Brennstoffzellenkühleinheit und/oder Brennstoffzelleneinheit.

Die Verwendung des erfindungsgemäßen Brennstoffzellenantriebes ist insbesondere für den Antrieb eines Nutzfahrzeuges, beispielsweise eines Omnibusses, vorteilhaft. Durch die Verwendung wenigstens zweier unabhängig voneinander ansteuerbarer Brennstoffzelleneinheiten mit jeweils einer eigenen regelbaren Brennstoffzellenkühleinheit können die Antriebsleistung und die Kühlung der Brennstoffzellenanlage flexibel und kostengünstig dem Kraftfahrzeug und der momentanen Fahrsituation angepasst werden.

Beispielsweise benötigt ein Nutzfahrzeug während der Beschleunigungsphasen aus dem Stand sowie während Bergauffahrten eine sehr hohe Antriebsleistung, die mit nur einer gegenwärtig verfügbaren Brennstoffzelleneinheit nicht oder nicht kosteneffizient erzielbar ist. Im Normalbetrieb bei einer Fahrt mit weitgehend konstanter relativ geringer Geschwindigkeit wird dagegen eine deutlich geringere Antriebsleistung benötigt.

Der erfindungsgemäße Brennstoffzellenantrieb mit wenigstens zwei unabhängig ansteuerbaren Brennstoffzelleneinheiten mit jeweils einer eigenen Brennstoffzellenkühleinheit ermöglicht es, sowohl eine hohe als auch eine geringe Leistungsanforderung bei einer jeweils angepassten Kühlleistung zu erfüllen. Insbesondere erlaubt dies, das Kraftfahrzeug mit einer dem momentanen Leistungsbedarf angepassten Anzahl von Brennstoffzelleneinheiten zu betreiben. Dadurch erhöht sich auch die Ausfallsicherheit des Fahrzeugantriebes, denn bei einem Ausfall einer der Brennstoffzelleneinheiten kann das Kraftfahrzeug weiterhin mit der oder den verbleibenden Brennstoffzelleneinheiten angetrieben werden.

Die Erfindung sieht ferner vor, dass alle zum Betrieb der Brennstoffzellenantage erforderlichen und zu kühlenden Komponenten mit Ausnahme der Brennstoffzellen, beispielsweise Umrichter, Luftverdichter und elektronische Steuerungseinheiten, mit einer von der Brennstoffzellenkühlanlage unabhängigen Niedertemperaturkühlanlage kühlbar sind. Dadurch wird einerseits die Brennstoffzellenkühlanlage entlastet, andererseits kann die Gesamtkühlanlage leistungs- und kostenoptimiert werden, da die Niedertemperaturkühlanlage an die im Vergleich zur Brennstoffzellenkühlanlage niedrigere Kühlleistungsanforderung der durch sie zu kühlenden Komponenten angepasst werden kann.

Durch die Variabilität des Kühlkonzeptes kann außerdem elektrische Lüfterleistung eingespart werden, was den Systemwirkungsgrad erhöht.

Ferner wirkt sich die Verwendung wenigstens zweier Brennstoffzelleneinheiten aufgrund eines verbilligenden Stückzahleffektes auch hinsichtlich der Herstellungskosten positiv aus.

Im Detail umfassen die Brennstoffzellenkühleinheiten bevorzugt jeweils einen eigenen Kühlmittelkreislauf mit wenigstens einer Umwälzpumpe, wenigstens einem Wärmetauscher und wenigstens einem Lüfter für jeden Wärmetauscher. Dabei sind die Pumpleistung der wenigstens einen Umwälzpumpe und/oder eine Drehzahl jedes Lüfters in Abhängigkeit von der wenigstens einen Regelgröße regelbar.

Dadurch sind die einzelnen Brennstoffzellenkühleinheiten für die einzelnen Brennstoffzelleneinheiten unabhängig voneinander regelbar, so dass die jeweils zugehörigen Brennstoffzelleneinheiten unabhängig voneinander und lastabhängig kühlbar sind.

Eine vorteilhafte, Ausgestaltung des erfindungsgemäßen Brennstoffzellenantriebes sieht Vor, dass eine Abwärme der Brennstoffzellenkühlanlage einem Heizkreislauf des Kraftfahrzeuges zuführbar ist. Dadurch wird diese Abwärme nutzbar und der Gesamtwirkungsgrad des Brennstoffzellenantriebes und des Heizkreislaufes des Kraftfahrzeuges erhöht.

Eine weitere vorteilhafte Ausgestaltung des erfindungsgemäßen Brennstoffzellenantriebes sieht vor, dass mittels der Brennstoffzellenkühlanlage oder der Niedertemperaturkühlanlage auch eine Anzahl von elektrischen Bremswiderständen für eine Bremse des Kraftfahrzeuges kühlbar sind, beispielsweise von Bremswiderständen, die zum Verbrauch einer von einer Dauerbremse und/oder Rekuperationsbremse des Kraftfahrzeuges gelieferten Energie vorgesehen sind. Dies erhöht die Effizienz des Systems bestehend aus dem Fahrzeugantrteb und dem Bremssystem, da die Brennstoffzellen- oder die Niedertemperaturkühlanlage während eines Bremsvorganges und damit zu Zeiten, zu denen der Brennstoffzellenantrieb nicht benötigt wird, zur Kühlung der Bremswiderstände einsetzbar ist.
Weitere Vorteile, Merkmale und Einzelheiten der Erfindung werden im Folgenden anhang von Ausführungsbeispielen unter Bezugnahme auf Zeichnungen beschrieben. Die Zeichnungen sind schematische Darstellungen und zeigen:
- Fig. 1: eine Brennstoffzellenanlage für einen Omnibus mit zwei Brennstoffzelleneinheiten und eine Brennstoffzellenkühlanlage mit zwei Brennstoffzellenkühleinheiten, die an einen Heizkreislauf und an Bremswiderstände eines Omnibusses gekoppelt sind,
- Fig. 2: eine Brennstoffzelleneinheit und eine Brennstoffzellenkühleinheit mit je vier unabhängig zuschaltbaren Wärmetauschern und Lüftern, und
- Fig. 3: eine Brennstoffzelleneinheit und eine Brennstoffzellenkühleinheit mit einem Wärmetauscher und vier unabhängig zuschaltbaren Lüftern.

Einander entsprechende Teile sind in allen Figuren mit den gleichen Bezugszeichen versehen.

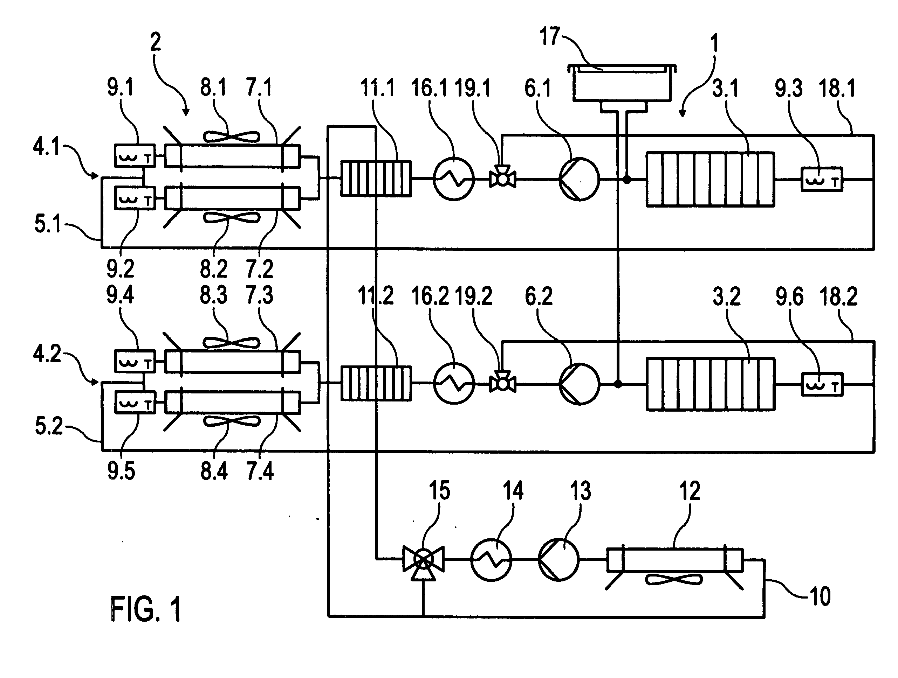

Figur 1 zeigt ein erstes Ausführungsbeispiel eines erfindungsgemäßen Brennstoffzellenantriebes für einen Omnibus mit einer Brennstoffzellenanlage 1 und einer Brennstoffzellenkühlanlage 2, wobei letztere an einen Heizkreislauf 10 und an Bremswiderstände 16.1, 16.2 des Omnibusses gekoppelt ist.

Die Brennstoffzellenanlage 1 umfasst in diesem Ausführungsbeispiel zwei unabhängig voneinander ansteuerbare Brennstoffzelleneinheiten 3.1 und 3.2 mit jeweils einer Anzahl von Brennstoffzellen, die zu einem so genannten Brennstoffzellenstack in Reihe geschaltet sind.

Die Brennstoffzellenkühlanlage 2 umfasst für jede der Brennstoffzelleneinheiten 3.1 und 3.2 eine eigene Brennstoffzellenkühleinheit 4.1 bzw. 4.2 zur Kühlung der Brennstoffzellen der jeweils zugehörigen Brennstoffzelleneinheit 3.1, 3.2. Dazu umfasst jede Brennstoffzellenkühleinheit 4.1, 4.2 einen Kühlmittelkreislauf 5.1, 5.2, in dem sich die jeweils zugehörige Brennstoffzelleneinheit 3.1, 3.2 befindet.

Der Kühlmittelkreislauf 5.1 der ersten Brennstoffzellenkühleinheit 4.1 ist durch eine erste Umwälzpumpe 6.1 antreibbar und umfasst ferner zwei parallel mit einem Kühlmittel durchströmbare Wärmetauscher 7.1 und 7.2. Zur parallelen Durchströmbarkeit der Wärmetauscher 7.1 und 7.2 wird der Kühlmittelkreislauf 5.1 vor den Wärmetauschern 7.1 und 7.2 in zwei Zweige geteilt und beide Zweige werden hinter den Wärmetauschern 7.1 und 7.2 wieder zusammengeführt.

Jeder Wärmetauscher 7.1 und 7.2 ist mit einem eigenen Lüfter 8.1 bzw. 8.2 versehen. Mittels der Lüfter 8.1, 8.2 ist durch den jeweiligen Wärmetauscher 7.1, 7.2 erwärmte Luft abführbar. Dies ist bereits bei geringen Fahrgeschwindigkeiten des Omnibusses vorteilhaft, beispielsweise im Falle eines Stadtbusses mit einer typischen Durchschnittsgeschwindigkeit von etwa 20 km/h, da ein bei geringen Fahrgeschwindigkeiten erzeugter Fahrtwind für eine erforderliche Ableitung der Abwärme der Wärmetauscher 7.1 und 7.2 nicht ausreicht.

Der Kühlmittelkreislauf 5.2 der zweiten Brennstoffzellenkühleinheit 4.2 ist ebenso ausgeführt wie der Kühlmittelkreislauf 5.1 der ersten Brennstoffzellenkühleinheit 4.1. Dementsprechend umfasst er eine zweite Umwälzpumpe 6.2 und zwei parallel mit dem Kühlmittel durchströmbare Wärmetauscher 7.3 und 7.4 mit jeweils einem eigenen Lüfter 8.3 und 8.4.

Die Kühlmittelkreisläufe 5.1 und 5.2 sind mit einem gemeinsamen Ausgleichsbehälter 17 für das Kühlmittel verbunden, mittels dessen eine temperaturbedingte Volumenänderung des Kühlmittels in den Kühlmittelkreisläufen 5.1 und 5.2 kompensierbar ist und die Drücke in den Kühlmittelkreisläufen 5.1 und 5.2 regulierbar sind.

Die Brennstoffzellenkühleinheiten 4.1 bzw. 4.2 sind derart ausgestaltet, dass die Kühlung der Brennstoffzelleneinheiten 3.1 und 3.2 unabhängig voneinander regelbar ist. Dazu sind die Pumpleistungen der Umwälzpumpen 6.1 und 6.2 und die Drehzahlen der Lüfter 8.1 bis 8.4 jeweils unabhängig voneinander einstellbar. Als Regelgrößen zur Kühlung jeder der Brennstoffzelleneinheiten 3.1 und 3.2 sind in diesem Ausführungsbeispiel Temperaturen des Kühlmittels an je drei Stellen innerhalb des jeweiligen Kühlmittelkreislaufes 5.1, 5.2 vorgesehen. Dazu werden die Temperaturen des Kühlmittels in dem ersten Kühlmittelkreislauf 5.1 von einem ersten Temperatursensor 9.1 hinter dem Ausgang des ersten Wärmetauschers 7.1, von einem zweiten Temperatursensor 9.2 hinter dem Ausgang des zweiten Wärmetauschers 7.2 und von einem dritten Temperatursensor 9.3 vor der ersten Brennstoffzelleneinheit 3.1 erfasst.

In Abhängigkeit von diesen momentan erfassten Temperaturen des Kühlmittels sind die Pumpleistung der ersten Umwälzpumpe 6.1 und/oder die Drehzahlen des ersten und zweiten Lüfters 8.1 und 8.2 einstellbar, so dass die Temperatur des Kühlmittels bei Eintritt in die erste Brennstoffzelleneinheit 3.1 und/oder an den Ausgängen des ersten und zweiten Wärmetauschers 7.1 und 7.2 auf einem konstanten vorgebbaren Niveau bleibt. Beispielsweise sind dazu mittels einer Steuereinheit für jede dieser Temperaturen jeweils ein Temperaturintervall durch einen unteren und einen oberen Schwellwert vorgebbar und die Pumpleistung der ersten Umwälzpumpe 6.1 und/oder die Drehzahlen des ersten und zweiten Lüfters 8.1 und 8.2 derart einstellbar, dass die Temperatur des Kühlmittels innerhalb des jeweiligen Temperaturintervalls bleibt.

Gleichermaßen ist die Kühlung der zweiten Brennstoffzelleneinheit 3.2 mittels dreier im zweiten Kühlmittelkreislaufes 5.2 entsprechend angeordneter Temperatursensoren 9.4 bis 9.6 regelbar.

Alternativ oder zusätzlich zu den von den Temperatursensoren 9.1 bis 9.6 erfassten Temperaturen des Kühlmittels können zur Regelung der Kühlung der Brennstoffzelleneinheiten 3.1 und 3.2 andere oder weitere Regelgrößen verwendet werden. Geeignete derartige Regelgrößen für die erste Brennstoffzelleneinheit 3.1 sind beispielsweise eine Temperatur der Brennstoffzelleneinheit 3.1 selbst, und/oder eine Temperatur des Kühlmittels an einer anderen oder weiteren Stelle innerhalb des Kühlmittelkreislaufes 5.1, z. B. an einer Stelle zwischen der Brennstoffzelleneinheit 3.1 und den Wärmetauschern 7.1 und 7.2. Entsprechende andere oder weitere Regelgrößen eignen sich für den zweiten Kühlmittelkreislauf 5.2.
Das Ausführungsbeispiel sieht ferner in jedem der Kühlmittelkreisläufe 5.1 und 5.2 einen Bypass 18.1, 18.2 vor, mittels dessen ein strömendes Kühlmittel an der jeweiligen Brennstoffzelleneinheit 3.1, 3.2 vorbeileitbar ist. Zur Umleitung des Kühlmittels durch den jeweiligen Bypass 18.1, 18.2 ist in den Kühlmittelkreisläufen 5.1 und 5.2 jeweils ein verstellbares Bypassventil 19.1, 19.2 vorgesehen, mittels dessen je nach Stellung des Bypassventils eine Strömung des Kühlmittels durch die jeweilige Brennstoffzelleneinheit 3.1, 3.2 oder durch den jeweiligen Bypass 18.1, 18.2 sperrbar ist. Dadurch kann die Kühlung jeder der Brennstoffzelleneinheiten 3.1, 3.2 unabhängig voneinander unterbunden werden, wenn eine Kühlung der jeweiligen Brennstoffzelleneinheit 3.1, 3.2 nicht benötigt wird oder unerwünscht ist. Letzteres ist beispielsweise bei einem Kaltstart des Omnibusses vorteilhaft, um die Brennstoffzellenanlage schnell auf eine optimale Betriebstemperatur zu bringen.

Die Kopplung der Brennstoffzellenkühlanlage 2 an den Heizkreislauf 10 des Omnibusses erfolgt über Heizwärmetauscher 11.1 und 11.2, mittels derer dem Heizkreislauf 10 jeweils eine Wärme aus den Kühlmittelkreisläufen 5.1 und 5.2 zuführbar ist. Dazu ist der erste Heizwärmetauscher 11.1 im ersten Kühlmittelkreislauf 5.1 zwischen der ersten Brennstoffzelleneinheit 3.1 und den Wärmetauschern 7.1 und 7.2 angeordnet, und der zweite Heizwärmetauscher 11.2 im zweiten Kühlmittelkreislauf 5.2 zwischen der zweiten Brennstoffzelleneinheit 3.2 und den Wärmetauschern 7.1 und 7.2. Ferner sind die Heizwärmetauscher 11.1 und 11.2 in Reihe über ein Heizkreislaufbypassventil 15 an den Heizkreislauf 10 des Omnibusses ankoppelbar. Der Heizkreislauf 10 des Omnibusses umfasst außerdem eine Businnenraumheizung 12, eine Heizumwälzpumpe 13 und einen Heizer 14.

Mit der Brennstoffzellenkühlanlage 2 sind in diesem Ausführungsbeispiel auch Bremswiderstände 16.1 und 16.2 für eine Bremse des Omnibusses, beispielsweise für eine elektromotorische Dauerbremse und/oder eine Rekuperationsbremse, kühlbar. Dazu sind der erste Bremswiderstand 16.1 in den ersten Kühlmittelkreislauf 5.1 und der zweite Bremswiderstand 16.2 in den zweiten Kühlmittelkreislauf 5.2 integriert.

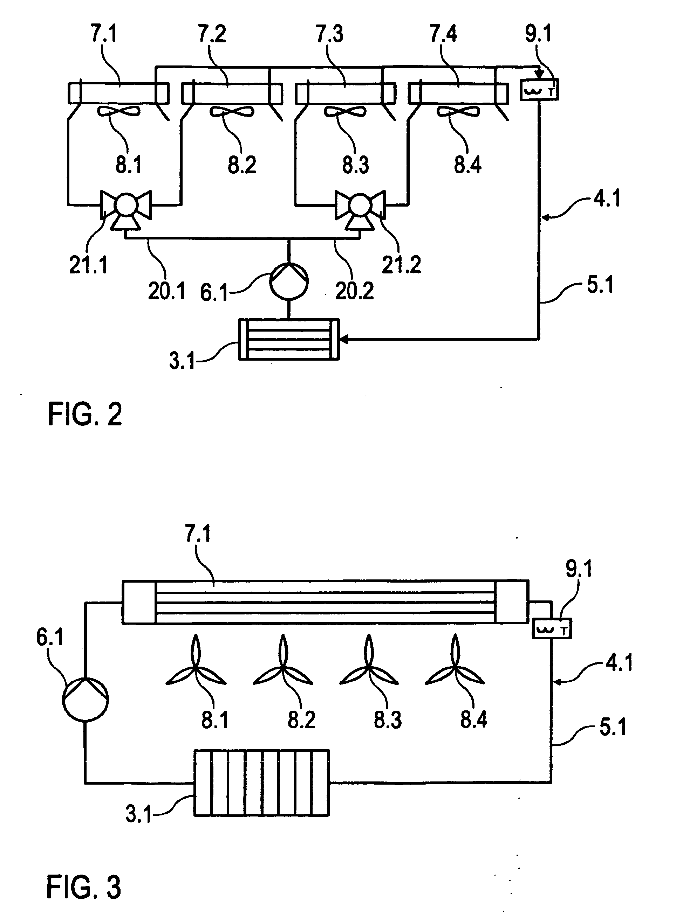

Figur 2 zeigt eine alternative Ausführung einer Brennstoffzelleneinheit 3.1 mit einer eigenen Brennstoffzellenkühleinheit 4.1 eines erfindungsgemäßen Brennstoffzellenantriebes. Die Brennstoffzellenkühleinheit 4.1 umfasst einen Kühlmittelkreislauf 5.1, in dem sich die Brennstoffzelleneinheit 3.1 befindet und der mit einer Umwälzpumpe 6.1 antreibbar ist. Dem Kühlmittelkreislauf 5.1 sind vier Wärmetauscher 7.1 bis 7.4 unabhängig voneinander zuschaltbar.

Dazu wird der Kühlmittelkreislauf 5.1 hinter der Umwälzpumpe 6.1 in zwei Kühlmittelkreislaufzweige 20.1 und 20.2 aufgeteilt. Der erste Kühlmittelkreislaufzweig 20.1 ist durch ein erstes verstellbares Dreiwegeventil 21.1 mit den ersten beiden Wärmetauschern 7.1 und 7.2 verbindbar. Dabei sind je nach Stellung des ersten Dreiwegeventils 21.1 entweder beide Wärmetauscher 7.1 und 7.2 oder nur der erste Wärmetauscher 7.1 oder nur der zweite Wärmetauscher 7.2 oder gar keiner der beiden Wärmetauscher 7.1 und 7.2 mit dem ersten Kühlmittelkreislaufzweig 20.1 verbindbar.

Entsprechend ist der zweite Kühlmittelkreislaufzweig 20.2 über ein zweites verstellbares Dreiwegeventils 21.2 je nach dessen Stellung entweder gleichzeitig mit dem dritten Wärmetauscher 7.3 und dem vierten Wärmetauscher 7.4 oder nur mit dem dritten Wärmetauscher 7.3 oder nur mit dem vierten Wärmetauscher 7.4 oder mit gar keinem der beiden Wärmetauscher 7.3 und 7.4 verbindbar.

Die Ausgänge der Wärmetauscher 7.1 bis 7.4 sind mit der Brennstoffzelleneinheit 3.1 über eine gemeinsame Zuleitung verbunden, in der sich ein Temperatursensor 9.1 zur Erfassung der Kühlmitteltemperatur befindet.

Dadurch ist je nach Stellung der Dreiwegeventile 19.1 und 19.2 ein Kühlmittelkreislauf 5.1 mit einer beliebigen Kombination der Wärmetauscher 7.1 bis 7.4 herstellbar und das Kühlmittel auf diese verteilbar. Ferner ist für jeden der Wärmetauscher 7.1 bis 7.4 ein eigener Lüfter 8.1 bis 8.4 vorgesehen, wobei die Lüfter 8.1 bis 8.4 unabhängig voneinander ansteuerbar sind.

Die Kühlung der Brennstoffzelleneinheit 3.1 ist in Abhängigkeit von der von dem Temperatursensor 9.1 erfassten Temperatur des Kühlmittels über die Anzahl der dem Kühlmittelkreislauf 5.1 zugeschalteten Wärmetauscher 7.1 bis 7.4, die jeweilige Drehzahl der zugehörigen Lüfter 8.1 bis 8.4 und/oder die Pumpleistung der Umwälzpumpe 6.1 regelbar.

Figur 3 zeigt eine dritte alternative Ausführung einer Brennstoffzelleneinheit 3.1 mit einer eigenen Brennstoffzellenkühleinheit 4.1 eines erfindungsgemäßen Brennstoffzellenantriebes. In diesem Ausführungsbeispiel befindet sich die Brennstoffzelleneinheit 3.1 in einem Kühlmittelkreislauf 5.1 der Brennstoffzellenkühleinheit 4.1 mit einer Umwälzpumpe 6.1 und einem einzigen, im Vergleich zu den vorher beschriebenen Ausführungsbeispielen größeren Wärmetauscher 7.1. Für den Wärmetauscher 7.1 sind in diesem Ausführungsbeispiel vier unabhängig ansteuerbare Lüfter 8.1 bis 8.4 vorgesehen. Ferner ist in dem Kühlmittelkreislauf 5.1 hinter dem Wärmetauscher 7.1 ein Temperatursensor 9.1 zur Erfassung der Kühlmitteltemperatur vorgesehen.

Der Wärmetauscher 7.1 ist in diesem Ausführungsbeispiel beispielsweise so dimensioniert, dass die Brennstoffzelleneinheit 3.1 im gering belasteten Betrieb bereits durch eine Belüftung des Wärmetauschers 7.1 durch einen Fahrtwind ausreichend kühlbar ist.

Bei höherer Belastung der Brennstoffzelleneinheit 3.1 ist der Wärmetauscher 7.1 durch einen oder mehrere der Lüfter 8.1 bis 8.4 belüftbar. Dabei ist die Kühlung der Brennstoffzelleneinheit 3.1 wie in den vorher beschriebenen Ausführungsbeispielen in Abhängigkeit von der von dem Temperatursensor 9.1 erfassten Kühlmitteltemperatur über die Anzahl der zugeschalteten Lüfter 8.1 bis 8.4, deren jeweilige Drehzahl und/oder die Pumpleistung der Umwälzpumpe 6.1 regelbar.

In den in den Figuren 2 und 3 dargestellten Ausführungsbeispielen können zur Regelung der Brennstoffzelleneinheit 3.1 alternativ oder zusätzlich zu der von dem Temperatursensor 9.1 erfassten Temperatur des Kühlmittels andere oder weitere Regelgrößen verwendet werden, beispielsweise eine Temperatur der Brennstoffzelleneinheit 3.1 selbst und/oder eine Temperatur des Kühlmittels an einer anderen oder weiteren Stelle innerhalb des Kühlmittelkreislaufes 5.1.

## Patentansprüche

1. Brennstoffzellenantrieb für ein Kraftfahrzeug, insbesondere ein Nutzfahrzeug, mit einer Brennstoffzellenanlage (1) als Energiequelle und einer Brennstoffzellenkühlanlage (2) zur lastabhängig regelbaren Kühlung der Brennstoffzellenanlage (1), wobei
die Brennstoffzellenanlage (1) wenigstens zwei unabhängig voneinander ansteuerbare Brennstoffzelleneinheiten (3.1, 3.2) mit jeweils einer Anzahl in Reihe geschalteter Brennstoffzellen umfasst,
**dadurch gekennzeichnet, dass**
die Brennstoffzellenkühlanlage (2) für jede dieser Brennstoffzelleneinheiten (3.1, 3.2) eine eigene Brennstoffzellenkühleinheit (4.1, 4.2) umfasst, mittels derer die Brennstoffzellen der jeweiligen Brennstoffzelleneinheit (3.1, 3.2) in Abhängigkeit von wenigstens einer Regelgröße kühlbar sind, wobei
alle zum Betrieb der Brennstoffzellenanlage (1) erforderlichen und zu kühlenden Komponenten mit Ausnahme der Brennstoffzellen mit einer von der Brennstoffzellenkühlanlage (2) unabhängigen Niedertemperaturkühlanlage kühlbar sind.

2. Brennstoffzellenantrieb nach Anspruch 1,
**dadurch gekennzeichnet, dass**
jede der Brennstoffzelleneinheiten (4.1, 4.2) einen Kühlmittelkreislauf (5.1, 5.2) mit wenigstens einer Umwälzpumpe (6.1, 6.2) und wenigstens einem Lüfter (8.1 bis 8.4) für jeden der Wärmetauscher (71. bis 7.4) umfasst und eine Pumpleistung der wenigstens einen Umwälzpumpe (6.1, 6.2) und/oder eine Drehzahl jedes Lüfters (8.1 bis 8.4) in Abhängigkeit von der wenigstens einen Regelgröße regelbar sind.

3. Brennstoffzellenantrieb nach Anspruch 1,
**dadurch gekennzeichnet, dass**
die wenigstens eine Regelgröße zur Kühlung der Brennstoffzellen jeder der Brennstoffzelleneinheiten (3.1, 3.2) wenigstens eine Temperatur eines Kühlmittels des jeweiligen Kühlmittelkreislaufes (5.1, 5.2) und/oder wenigstens eine Temperatur der jeweiligen Brennstoffzelleneinheit (3.1, 3.2) ist.

4. Brennstoffzellenantrieb nach einem der Ansprüche 1 bis 3,
**dadurch gekennzeichnet, dass** eine Abwärme der Brennstoffzellenkühlanlage (2) einem Heizkreislauf (10) des Kraftfahrzeuges zuführbar ist.

5. Brennstoffzellenantrieb nach einem der Ansprüche 1 bis 4,
**dadurch gekennzeichnet, dass**
mittels der Brennstoffzellenkühlanlage (2) oder der Niedertemperaturkühlanlage auch eine Anzahl elektrischer Bremswiderstände (16.1, 16.2) für eine Bremse des Kraftfahrzeuges kühlbar sind.

6. Brennstoffzellenantrieb nach einem der Ansprüche 1 bis 5,
**dadurch gekennzeichnet, dass**
jede der Brennstoffzellenkühleinheiten (4.1,4.2) eine Anzahl von parallel von dem Kühlmittel durchströmbaren Wärmetauschern (7.1 bis 7.4) und für jeden dieser Wärmetauscher (7.1 bis 7.4) einen eigenen einzeln ansteuerbaren Lüfter (8.1 und 8.4) umfasst.

7. Brennstoffzellenantrieb nach Anspruch 6,
**dadurch gekennzeichnet, dass**
die Wärmetauscher (7.1 bis 7.4) jeder der Brennstoffzellenkühleinheiten (4.1, 4.2) einzeln und unabhängig voneinander dem jeweiligen Kühlmittelkreislauf (5.1, 5.2) zuschaltbar sind.

8. Brennstoffzellenantrieb nach Anspruch 7,
**dadurch gekennzeichnet, dass**
jeder der Wärmetauscher (7.1 bis 7.4) über ein verstellbares Dreiwegeventil (21.1, 21.2) einem Kühlmittelkreislauf (5.1, 5.2) zuschaltbar ist.

9. Brennstoffzellenantrieb nach einem der Ansprüche 1 bis 5,
**dadurch gekennzeichnet, dass**
jede der Brennstoffzellenkühleinheiten (4.1, 4.2) genau einen Wärmetauscher (7.1 bis 7.4) und eine Anzahl von einzeln und unabhängig voneinander ansteuerbaren Lüftern (8.1 und 8.4) umfasst.

## Claims

1. Fuel cell drive for a motor vehicle, in particular a utility vehicle, having a fuel cell assembly (1) as an energy source and a fuel cell cooling assembly (2) for adjustably cooling the fuel cell assembly (1) in dependence upon the load, wherein
the fuel cell assembly (1) comprises at least two fuel cell units (3.1, 3.2) which can be activated independently from each other with respectively a number of fuel cells connected in series,
**characterised in that**
the fuel cell cooling assembly (2) comprises, for each of said fuel cell units (3.1, 3.2), an individual fuel cell cooling unit (4.1, 4.2), by means of which the fuel cells of the respective fuel cell unit (3.1, 3.2) can be cooled in dependence upon at least one control variable, wherein
all components required for operation of the fuel cell assembly (1) and which are to be cooled, with the exception of the fuel cells, can be cooled with a low temperature cooling assembly which is independent from the fuel cell cooling assembly (2).

2. Fuel cell drive according to claim 1,
**characterised in that**
each of the fuel cell units (4.1, 4.2) comprises a coolant circuit (5.1, 5.2) with at least one circulating pump (6.1, 6.2) and at least one blower (8.1 to 8.4) for each of the heat exchangers (7.1 to 7.4), and a pumping capacity of the at least one circulating pump (6.1, 6.2) and / or a speed of each blower (8.1 to 8.4) can be controlled in dependence upon the at least one control variable.

3. Fuel cell drive according to claim 1,
**characterised in that**
the at least one control variable for cooling the fuel cells of each of the fuel cell units (3.1, 3.2) is at least a temperature of a coolant of the respective coolant circuit (5.1, 5.2) and / or at least a temperature of the respective fuel cell unit (3.1, 3.2).

4. Fuel cell drive according to one of the claims 1 to 3,
**characterised in that**
a waste heat of the fuel cell cooling assembly (2) can be supplied to a heating circuit (10) of the motor vehicle.

5. Fuel cell drive according to one of the claims 1 to 4,
**characterised in that**
a number of electrical braking resistors (16.1, 16.2) for a brake of the motor vehicle can also be cooled by means of the fuel cell cooling assembly (2) or the low temperature cooling assembly.

6. Fuel cell drive according to one of the claims 1 to 5,
**characterised in that**
each of the fuel cell cooling units (4.1, 4.2) comprises a number of heat exchangers (7.1 to 7.4), through which the coolant can flow in parallel, and a blower (8.1 and 8.4) which can be individually activated for each of these heat exchangers (7.1 to 7.4).

7. Fuel cell drive according to claim 8,
**characterised in that**
the heat exchangers (7.1 to 7.4) of each of the fuel cell cooling units (4.1, 4.2) can be connected to the respective coolant circuit (5.1, 5.2) individually and independently of each other.

8. Fuel cell drive according to claim 7,
**characterised in that**
each of the heat exchangers (7.1 to 7.4) can be connected to a coolant circuit (5.1, 5.2) via an adjustable three-way valve (21.1, 21.2).

9. Fuel cell drive according to one of the claims 1 to 5,
**characterised in that**
each of the fuel cell cooling units (4.1, 4.2) comprises exactly one heat exchanger (7.1 to 7.4) and a number of blowers (8.1 and 8.4) which can be activated individually and independently of each other.

## Revendications

1. Commande de pile à combustible pour un véhicule automobile, en particulier un véhicule utilitaire équipé d'un dispositif de pile à combustible (1) en tant que source d'énergie et un dispositif de refroidissement de pile à combustible (2) destiné au refroidissement pouvant être réglé en fonction de la charge du dispositif de pile à combustible (1), le dispositif de pile à combustible (1) comprenant au moins deux unités de pile à combustible (3.1, 3.2) pouvant être commandées de manière indépendante l'une de l'autre, dotées chacune d'un certain nombre de piles à combustibles connectées en série, **caractérisée en ce que** le dispositif de refroidissement de pile à combustible (2) comprend pour chacune desdites unités de piles à combustibles (3.1, 3.2) une propre unité de refroidissement de pile à combustible (4.1, 4.2), au moyen de laquelle les piles à combustibles de chaque unité de pile à combustible (3.1, 3.2) peuvent être refroidies en fonction d'au moins une variable de réglage, l'ensemble des composants nécessaires au fonctionnement du dispositif de pile à combustible (1) et servant au refroidissement pouvant être refroidi à l'exception des piles à combustibles dotées d'un dispositif de refroidissement à basse température indépendant du dispositif de refroidissement de pile à combustible (2).

2. Commande de pile à combustible selon la revendication 1, **caractérisée en ce que** chaque unités de pile à combustible (4.1, 4.2) comprend un circuit de refroidissement (5.1, 5.2) équipé d'au moins une pompe de recirculation (6.1, 6.2) et d'au moins une soufflante (8.1 à 8.4) pour chacun des échangeurs thermiques (7.1 à 7.4) et une capacité de pompage d'au moins une pompe de recirculation (6.1, 6.2) et/ou une vitesse de chaque soufflante (8.1 à 8.4) pouvant être réglés en fonction d'au moins une variable de réglage.

3. Commande de pile à combustible selon la revendication 1, **caractérisée en ce que** la ou les variables de réglage servant au refroidissement des piles à combustibles de chacune des unités de pile à combustible (3.1, 3.2) est au moins une température d'un réfrigérant de chaque circuit de réfrigérant (5.1, 5.2) et/ou une température de chaque dispositif de pile à combustible (3.1, 3.2).

4. Commande de pile à combustible selon l'une quelconque des revendications 1 à 3, **caractérisée en ce qu'**une chaleur dissipée du dispositif de pile à combustible (2) peut être amenée à un circuit de chauffage (10) du véhicule automobile.

5. Commande de pile à combustible selon l'une quelconque des revendications 1 à 4, **caractérisée en ce qu'**au moyen du dispositif de pile à combustible (2) ou du dispositif de refroidissement à faible température un certain nombre de résistances de freinage électriques (16.1, 16.2) peut être également refroidi pour un freinage du véhicule automobile.

6. Commande de pile à combustible selon l'une quelconque des revendications 1 à 5, **caractérisée en ce que** chacune des unités de refroidissement de pile à combustible (4.1, 4.2) comprend un certain nombre d'échangeurs thermiques (7.1 à 7.4) pouvant être parcouru parallèlement par le réfrigérant et une soufflante (8.1 et 8.4) pouvant être commandée de manière autonome pour chacun desdits échangeurs thermiques (7.1 à 7.4).

7. Commande de pile à combustible selon la revendication 6, **caractérisée en ce que** les échangeurs thermiques (7.1 à 7.4) de chacune des unités de refroidissement de pile à combustible (4.1, 4.2) peuvent être raccordés à chaque circuit de réfrigérant (5.1, 5.2) de manière individuelle et indépendante des uns des autres.

8. Commande de pile à combustible selon la revendication 7, **caractérisé en ce que** chacun des échangeurs thermiques (7.1 à 7.4) peut être raccordé par l'intermédiaire d'une soupape à trois voies réglable (21.1, 21.2) à un circuit de réfrigérant (5.1, 5.2).

9. Commande de pile à combustible selon l'une quelconque des revendications 1 à 5, **caractérisée en ce que** chacune des unités de refroidissement de pile à combustible (4.1, 4.2) comprend de manière précise un échangeur thermique (7.1 à 7.4) et un certain nombre de soufflantes (8.1 et 8.4) pouvant être commandées de manière autonome et indépendante des unes des autres.
